# EUROPEAN PATENT SPECIFICATION

(11) **EP 3 517 566 B1**
(45) Date of publication and mention of the grant of the patent: **30.06.2021**
(21) Application number: 18752080.4
(22) Date of filing: 05.02.2018
(51) Int. Cl.: C08K 5/5313, C08K 3/32, C08K 3/24, C08L 77/02, C08L 77/06, C08L 83/04, C08K 13/04, C08K 7/14, C08K 3/22, C08K 5/5317

(54) **HALOGEN-FREE FLAME RETARDANT COMPOUND SYSTEM FOR GLASS FIBER REINFORCED NYLON AND APPLICATION THEREOF IN HALOGEN-FREE FLAME RETARDANT GLASS FIBER REINFORCED NYLON MATERIAL**
HALOGENFREIES FLAMMSCHUTZVERBUNDSYSTEM FÜR GLASFASERVERSTÄRKTES NYLON UND ANWENDUNG DAVON IN HALOGENFREIEM FLAMMSCHUTZGLASFASERVERSTÄRKTEM NYLONMATERIAL
SYSTÈME DE COMPOSÉ IGNIFUGE SANS HALOGÈNE POUR NYLON RENFORCÉ PAR DES FIBRES DE VERRE ET APPLICATION DE CELUI-CI DANS UN MATÉRIAU DE NYLON RENFORCÉ PAR DES FIBRES DE VERRE SANS HALOGÈNE

(30) Priority: 22.11.2017 CN 201711175840
(43) Date of publication of application: 31.07.2019
(73) Proprietor: Jiangsu Liside New Material Co., Ltd., Taizhou, Jiangsu 225529 (CN)
(72) Inventor: LI, Jinzhong, Taizhou Jiangsu 225529 (CN); LEI, Hua, Hangzhou Zhejiang 310058 (CN)
(74) Representative: Rössler, Matthias
(86) International application number: PCT/CN2018/075262
(87) International publication number: WO 2019/100592

(56) References cited:
- WO-A1-2015/024487
- WO-A1-2016/165966
- WO-A1-2017/148721
- CN-A- 1 926 192
- CN-A- 102 167 904
- CN-A- 103 717 676
- CN-A- 103 946 289
- CN-A- 104 292 827
- CN-A- 106 189 221
- CN-A- 106 543 714
- JP-B2- 5 310 296
- US-B1- 6 255 371

## Description

### Technical Field

This invention relates to the technical field of fire retardant, specifically relating to a halogen-free flame retardant mixture system for glass fiber reinforced nylon and its application in halogen-free flame retardant glass fiber reinforced nylon material.

### Background Art

Attributable to good rigidity and impact resistance, low warpage, high size stability and good appearance etc., glass fiber reinforced nylon is widely applied in the fields of electronics and appliances. Application in these fields has requirement of fire resistance on material, whereas nylon is an inflammable material, after it is synthesized with glass fiber, due to the wick effect of the glass fiber, it makes the fiber glass reinforced nylon more inflammable. Therefore, to apply glass fiber reinforced nylon in these fields, the fire resistance needs to be guaranteed, plus the wick effect, it's more difficult to achieve fire resistance.

To realize fire resistance of glass fiber reinforced nylon, there are two basic fire resistance systems: halogen fire resistance system and non-halogen fire resistance system. Halogen fire resistance system generally contains fire retardant in synergy with antimonous oxide. Many researches show that glass fiber reinforced nylon material added with brominated flame retardant can generate hazard substances such as thick smoke and hydrogen bromide when burning, causing suffocation. Therefore, to develop safe, environmental, halogen-free flame retardant system for glass fiber reinforced nylon has become the focus of research, and novel halogen-free fire retardant or flame-retardant system for glass fiber reinforced nylon have been emerging in recent years.

According to relevant literatures, halogen-free fire retardants applied to glass fiber primarily comprise two basic systems: one is red phosphorus, another is phosphorus-nitrogen system. Regarding red phosphorus, though its fire resistance effect is excellent, it has two problems: one is its color, this limits its scope of application to black product generally; another is the violently toxic substances such as phosphine, which can be generated during processing, and resulting in environmental and safety problems. Therefore, red phosphorus is not the optimum choice for glass fiber reinforced nylon. As to phosphorus-nitrogen fire retardant system, it is an efficient fire resistance system with high fire resistance efficiency and avoids some deficiencies of the red phosphorus, and is the hot spot of current research.

Currently, the most used is phosphorus-nitrogen mixture system based on aluminum diethylphosphinate, e.g., aluminum diethylphosphinate and melamine polyphosphate (MPP) mixture system. Attributable to its high phosphorus content and the phosphorus-nitrogen synergy effect, efficient fire resistance for glass fiber reinforced nylon can be realized without product color problem while providing high decomposing temperature without generating violently toxic gases such as phosphine during high temperature processing of glass fiber reinforced nylon. However, phosphorus-nitrogen mixture system based on aluminum diethylphosphinate still has some deficiencies primarily manifested in that: first, a certain degree of reactive decomposition can occur to the two components at high temperature, generating small amount of acid gases, which can corrode the metal parts of the processing equipment. As a result, such parts need to be replaced after a certain period of time, leading to increased cost and reduced production efficiency; Second, a certain degree of precipitation occurs to the compound MPP containing nitrogen, during the injection molding of the material, after a certain number of products are molded, deposit sediment will exist on the mold, which can affect the appearance of the product, and need to be cleared by shutdown, not only affecting productivity, but also leading to migration of the flame retardants to the surface of the product, resulting in uneven distribution and loss of flame retardants, finally the fire resistance of the material is lost, which will cause safety hazard WO 2016/165966 A1 relates to halogen-free flame-retardant compositions comprising polyamide 66, glass fibers, aluminum diethylphosphinate, aluminum orthophosphite, and zinc stannate. WO 2015/024487 A1 discloses halogen-free flame-retardant compositions comprising polyamide 66, glass fibers, aluminum diethylphosphinate, melamine calcium phosphite, and zinc borate.

Overall, the flame retardant system of the glass fiber reinforced nylon in the prior art has problems of color, toxic gas generation, precipitation and corrosion, etc. Wherein some of them are deadly problems, resulting in non-use of the system. Some result in cost increase and efficiency decrease. Therefore, it is necessary to develop novel halogen-free flame retardant system.

### Content of the Invention

In order to overcome the deficiencies of the phosphorus-nitrogen mixture flame retardant system, which is based on aluminum diethylphosphinate and applied to glass fiber reinforced nylon material, in the prior art, this invention discloses a halogen-free flame retardant mixture system for glass fiber reinforced nylon, which has the benefits of high fire resistance, no migration and no corrosion of equipment etc., which can adapt to the glass fiber reinforced nylon material system to obtain comprehensively excellent halogen-free flame retardant glass fiber reinforced nylon material.

The specific technical solution is as follows:
A halogen-free flame retardant mixture system for glass fiber reinforced nylon, of which the raw material composition by weight percentage comprises:

| | |
|---|---|
| Aluminum diethylphosphinate | 40∼90%; |
| Aluminum orthophosphite | 8∼30%; |
| Melamine metal phosphite | 1∼20%; |
| Zinc Stannate | 1∼10%. |

In this invention, synergistic flame retardant mixture system based on phosphorus-aluminum-nitrogen structure is formed by adopting aluminum diethylphosphinate in synergy with special high temperature resistant non-migration aluminum orthophosphite, melamine metal phosphite and zinc stannate, overcoming the shortcomings of being easy to corrode and easy to migrate and precipitate of the prior art.

Below is detailed description of this invention:
The inventor of this invention conducted wide in-depth research in order to overcome the shortcomings of the halogen-free flame retardant system applied to glass fiber reinforced nylon material in the prior art. 'Considering the existing problem with the mixture flame retardant system based on aluminum diethylphosphinate for the glass fiber reinforced nylon, and after studying new fire resistant system, it is found out that the problem can be very well-solved through aluminum diethylphosphinate in synergy with aluminum orthophosphite and a small amount of melamine metal phosphite.

The chemical structure of aluminum diethylphosphinate is as shown in formula (I) below:

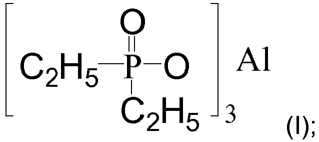

The characteristics of aluminum diethylphosphinate are high content of phosphorus, good flame retardant performance, high initial decomposition temperature, low water solubility, anti-migration without moisture absorption. Currently, it is mostly applied in engineering plastics such as nylon and PBT, especially in glass fiber reinforced engineering plastics. When using aluminum diethylphosphinate only, no problem of precipitation, however, its fire resistance performance is insufficient, only when it is mixed with nitrogen containing MPP, it can meet the fire resistance requirement. Currently, the flame retardant system applied to glass fiber reinforced nylon is basically a system of aluminum diethylphosphinate in synergy with MPP.

However, when aluminum diethylphosphinate is mixed with MPP for use, its temperature of decomposition will decrease, and acid gas and ammonia gas will be released during processing, corroding the metal parts of the processing equipment. On the other hand, the migrating characteristic of MPP generate deposit sediment on the appearance of the mold, affecting aesthetics, and the mold needs to be cleaned on regular basis, thus reducing productivity. It is obvious that MPP is the main reason for these problems. Therefore, use of MPP should be reduced or even stopped where it is possible.

Based on research, the inventor of this application found out that in the presence of aluminum diethylphosphinate, adding appropriate amount of aluminum orthophosphite, a flame retardant system with phosphorus-aluminum as main structure can be formed. Said system has good fire resistance performance. The molecular structure of aluminum orthophosphite is as shown in formula (II) below:

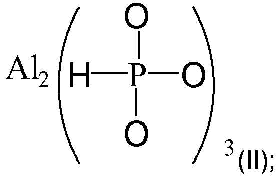

Aluminum orthophosphite has high thermal decomposing temperature, low water solubility, and is anti-migrating, which can solve the problems of precipitation and deposition on mold through synergy with aluminum diethylphosphinate. However, it barely improves the problem of corrosion. In addition, its fire resistance performance is slightly lower than the phorphorus-nitrogen mixture system.

Therefore, through research conducted by the inventor of this invention, it is found out that by introducing small amount of compound with high temperature resistant and non-precipitation into the above-described system - melamine metal phosphite, not only the problem of corrosion can be solved, but also the fire resistance performance is provided, and there is no precipitation-problem.

Melamine metal phosphite has high temperature of decomposing, shows pH value higher than MPP in the water solution, and has low water solubility without migration and precipitation. Besides, this system contains nitrogen, which can be in synergy with phosphorus-aluminum structure to improve fire resistance performance.

Preferably, the said melamine metal phosphite is selected from melamine aluminum phosphite and/or melamine calcium phosphite.

For the method of preparing the said melamine metal phosphite, reference is made to the Chinese Patent CN 105492520 A, specifically:
Melamine and metal phosphite react with each other in aqueous solution, then the solution is heated in the presence of oxidant at temperature of 150-500°C to obtain solid compound;
The said metal phosphite is selected from aluminum orthophosphite and/or calcium phosphite.

In addition, it is further found out that by introducing small amount of high temperature resistant and non-precipitation zinc stannate in the above-described system, anti-corrosion performance of the system can be further improved while fire resistant performance is provided, and there is no precipitation-problem.

The molecular formula of zinc stannate is ZnSnO₃, which has high temperature of decomposing, low water solubility and non-precipitation. It can be used in synergy with phosphorus-aluminum structure to improve fire resistance performance while suppressing smoke and reducing smoke density.

Preferably, the average grain size of the said aluminum diethylphosphinate D50 is 20~50µm; the average grain size of the said aluminum orthophosphite D50 is 20~50µm; the average grain size of the said melamine metal phosphite D50 is 20~50µm; the average grain size of the said zinc stannate D50 is 20~50µm. All of the above-described powder materials adopt the same grain size range for even mixture.

This invention further discloses a halogen-free flame retardant glass fiber reinforced nylon material using the above-described halogen-free fire retardant mixture system.

Preferably, the said halogen-free flame retardant glass fiber reinforced nylon material having a raw material composition by weight percentage comprises:

| | |
|---|---|
| Nylon | 30∼60%; |
| Glass fiber | 20∼40%; |
| Halogen-free flame retardant mixture system | 10∼30%; |
| Auxiliaries | 0.1∼2%. |

The said nylon is selected from at least one of nylon6, nylon66, nylon MXD6 and nylon 6T.

The said auxiliaries comprise lubricant and antioxidant.

More preferably, in the halogen-free glass fiber reinforced nylon material, the said halogen-free flame retardant mixture system having a raw material composition by weight percentage comprises:

| | |
|---|---|
| Aluminum diethylphosphinate | 60∼75%; |
| Aluminum orthophosphite | 15∼30%; |
| Melamine metal phosphite | 5∼15%; |
| Zinc stannate | 2∼8%. |

The weight percentage of the said halogen-free flame retardant mixture system in the halogen-free flame retardant glass fiber reinforced nylon material is 15∼20%.

The halogen-free flame retardant glass fiber reinforced nylon material obtained from the above-described formula can reach fire resistance Class UL94 V0 (1.6mm), which has the advantages of non-corrosion to equipment and non-precipitation etc.

This invention further discloses a method for preparing the halogen-free flame retardant glass fiber reinforced nylon material, specifically:
(1) The components in the halogen-free flame retardant mixture system are weighed per the preparation ratio, and are evenly mixed with the auxiliaries through high speed stirring to obtain powder material;
(2) Double-screw extruder is adopted, after the temperatures set for the areas are stabilized, feed nylon through the hopper, and add glass fiber through the glass fiber feed port, and add powder material from step (1) through the powder feed port, start the main unit and the feeder, and then the said halogen-free glass fiber reinforced nylon material is obtained through extrusion and granulation.

Comparing to the prior art, this invention has the following benefits:
The halogen-free flame retardant mixture system based on the mixture of aluminum diethylphosphinate, aluminum orthophosphite, melamine metal phosphite and zinc stannate provided in this invention has the benefits of high fire resistance, non-migration and non-corrosion etc., which can adapt to the glass fiber reinforced nylon material system very well. The obtained halogen-free flame retardant glass fiber reinforced nylon material reaches fire resistance Class nUL94 V0 (1.6mm), and has no precipitation and is not corrosive to equipment.

### Specific Implementation

### Embodiment 1

The halogen-free flame retardant mixture system is applied to glass fiber reinforced nylon, and the performance of the fire retardant is tested using the following steps and test methods.

### (1) Mixing and preparing the halogen-free flame retardant system

Add the components and other auxiliaries of the mixture flame retardant system to the high speed stirrer per the preparation ratio, start high speed stirring for 10min to complete mixing and preparing the powder and discharge the material.

### (2) Extrusion and granulation of the material

Set the temperatures of the areas of the double-screw extruder to the target values and wait for the temperatures to stabilize for 20min, add nylon through the hopper, add glass fiber through the glass fiber feed port, add the powder mixed and prepared from step (1) through the powder feed port, and then start the main unit and the feeder to complete the extrusion and granulation of the material. The granulated material is conveyed to the stock bin through the blast conveying system to be baked and dried.

### (3) Application and test of the material

Inject-mold the dried material into various standard samples as required by the test standards using injection molding machine, and conduct relevant performance tests of the material. Primarily focus on the following performance indicators:

### Fire resistance test

Conduct test in accordance with test standard UL94 V0.

### Anti-migration test

Put the prepared halogen-free flame retardant glass fiber reinforced nylon sample into the constant temperature humidity chamber, set temperature to 85°C, relative humidity to 85%, visually check the surface condition of the sample after 168 hours.

### Corrosion test

A metal piece is arranged on the die head, allow the high temperature material to be in contact with the metal piece at the die head, measure the metal loss after granulating 25kg material, the higher the loss is, the poorer the anti-corrosion performance is. If the corrosion loss is <0.1%, it is regarded as acceptable.

The materials and preparation ratios in this embodiment along with the test results are listed in Table 1.

For the method of preparing melamine aluminum phosphite in this embodiment, reference is made to patent CN 105492520 A.

### Embodiment 2

The implementation process is the same as in embodiment 1, the ratio of aluminum diethylphosphinate stays the same, but those of aluminum orthophosphite, melamine aluminum phosphite and zinc stannate are adjusted. Other materials and preparation ratios along with the test results are listed in Table 1.

### Embodiment 3

The implementation process is the same as in embodiment 1, the ratios of aluminum diethylphosphinate and aluminum orthophosphite are adjusted, but the total amount of the fire retardant system remains unchanged. Other materials and preparation ratios along with the test results are listed in Table 1.

### Embodiment 4

The implementation process is the same as in embodiment 1, the ratios of aluminum diethylphosphinate and zinc stannate remain unchanged, but those of the other two components are adjusted, and the total amount of the fire retardant system remains unchanged. Other materials and preparation ratios along with the test results are listed in Table 1.

### Comparison example 1

The implementation process is the same as in embodiment 1, but no melamine aluminum phosphite is used. Other materials and preparation ratios along with the test results are listed in Table 1.

### Comparison example 2

The implementation process is the same as in embodiment 1, but no aluminum orthophosphite and melamine aluminum phosphite are used. Other materials and preparation ratios along with the test results are listed in Table 1.

### Comparison example 3

The implementation process is the same as in embodiment 1, but no aluminum orthophosphite is used. Other materials and preparation ratios along with the test results are listed in Table 1.

### Comparison example 4

The implementation process is the same as in embodiment 1, but only aluminum diethylphosphinate is used. Other materials and preparation ratios along with the test results are listed in Table 1.

### Comparison example 5

The implementation process is the same as in embodiment 1, but aluminum diethylphosphinate and melamine polyphosphate (MPP) mixture is used. Other materials and preparation ratios along with the test results are listed in Table 1.

**Table 1**

| **Raw material composition** | | **Embodi ment 1** | **Embodi ment 2** | **Embodi ment 3** | **Embodi ment 4** | **Compari son example 1** | **Compari son example 2** | **Compari son example 3** | **Compari son example 4** | **Compari son example 5** |
|---|---|---|---|---|---|---|---|---|---|---|
| PA66 | | 51 | 51 | 51 | 51 | 51 | 51 | 51 | 51 | 49 |
| Glass fiber | | 30 | 30 | 30 | 30 | 30 | 30 | 30 | 30 | 30 |
| Aluminum diethylphosphinate | | 12 | 12 | 11 | 11 | 12 | 17 | 15 | 18 | 13 |
| Aluminum orthophosphite | | 3 | 3.5 | 4 | 5 | 5 | - | - | - | - |
| Melamine aluminum phosphite | | 2 | 1 | 2 | 1 | - | | 2 | | |
| Zinc stannate | | 1 | 0.5 | 1 | 1 | 1 | 1 | 1 | - | - |
| Silicone | | 0.5 | 0.5 | 0.5 | 0.5 | 0.5 | 0.5 | 0.5 | 0.5 | 0.5 |
| Antioxidant (1098) | | 0.5 | 0.5 | 0.5 | 0.5 | 0.5 | 0.5 | 0.5 | 0.5 | 0.5 |
| Melamine polyphosphate (MPP) | | - | - | - | | - | - | - | - | 7 |
| Material perform ance | Fire resistan ce (UL94-V0, 1.6mm) | PASS | PASS | PASS | PASS | PASS | FAIL | FAIL | FAIL | PASS |
| | Corrosi on (%) | 0.01 | 0.02 | 0.01 | 0.01 | 0.20 | 0.25 | 0.22 | 0.30 | 0.6 |
| | Migrati on | None | None | None | None | None | None | None | None | Yes |

## Claims

1. A halogen-free flame retardant mixture system for glass fiber reinforced nylon, **characterized in that**: the raw material composition by weight percentage comprises:
| | |
|---|---|
| Aluminum diethylphosphinate | 40∼90%; |
| Aluminum orthophosphite | 8∼30%; |
| Melamine metal phosphite | 1∼20%; |
| zinc Stannate | 1∼10%. |

2. A halogen-free flame retardant mixture system for glass fiber reinforced nylon according to Claim 1, **characterized in that**: the average grain size of the said aluminum diethylphosphinate D50 is 20∼50µm.

3. A halogen-free flame retardant mixture system for glass fiber reinforced nylon according to Claim 1, **characterized in that**: the average grain size of the said aluminum orthophosphite D50 is 20∼50µm.

4. A halogen-free flame retardant mixture system for glass fiber reinforced nylon according to Claim 1, **characterized in that**: the said melamine metal phosphite is selected from melamine aluminum phosphite and/or melamine calcium phosphite, with the average grain size D50 at 20∼50µm.

5. A halogen-free flame retardant mixture system for glass fiber reinforced nylon according to Claim 1, **characterized in that**: the average grain size of the said zinc stannate D50 is 20 <D50<50µm.

6. A halogen-free flame retardant glass fiber reinforced nylon material, **characterized in that**: one of the said halogen-free flame retardant mixture systems according to Claims 1∼5 is used.

7. A halogen-free flame retardant glass fiber reinforced nylon material according to Claim 6, **characterized in that**: the raw material composition by weight percentage comprises:
| | |
|---|---|
| Nylon | 30∼60%; |
| Glass fiber | 20∼40%; |
| Halogen-free flame retardant mixture system | 10∼30%; |
| Auxiliaries | 0.1∼2%; |
wherein the said auxiliaries comprise lubricant and antioxidant.

8. A halogen-free flame retardant glass fiber reinforced nylon material according to Claim 7, **characterized in that**: the raw material composition by weight percentage of the said halogen-free flame retardant mixture system comprises:
| | |
|---|---|
| Aluminum diethylphosphinate | 60∼75%; |
| Aluminum orthophosphite | 15∼30%; |
| Melamine metal phosphite | 5∼15%; |
| Zinc stannate | 2∼8%. |

9. A halogen-free flame retardant glass fiber reinforced nylon material according to Claim 6, **characterized in that**: the said nylon is selected from at least one of nylon6, nylon66, nylon MXD6 and nylon 6T.

## Patentansprüche

1. Ein halogenfreies flammhemmendes Mischsystem für glasfaserverstärktes Nylon, **dadurch gekennzeichnet, dass** die Rohmaterialzusammensetzung in Gewichtsprozent umfasst:
| | |
|---|---|
| Aluminiumdiethylphosphinat | 40-90%; |
| Aluminiumorthophosphit | 8-30%; |
| Melamin-Metall-Phosphit | 1-20%; |
| Zinkstannat | 1-10%. |

2. Ein halogenfreies flammhemmendes Mischsystem für glasfaserverstärktes Nylon nach Anspruch 1, **dadurch gekennzeichnet, dass** die mittlere Korngröße des genannten Aluminiumdiethylphosphinats D50 20-50µm beträgt.

3. Ein halogenfreies flammhemmendes Mischsystem für glasfaserverstärktes Nylon nach Anspruch 1, **dadurch gekennzeichnet, dass** die mittlere Korngröße des genannten Aluminiumorthophosphits D50 20-50µm beträgt.

4. Ein halogenfreies flammhemmendes Mischsystem für glasfaserverstärktes Nylon nach Anspruch 1, **dadurch gekennzeichnet, dass** das genannte Melamin-Metall-Phosphit ausgewählt ist aus Melamin-Aluminium-Phosphit und/oder Melamin-Calcium-Phosphit, bei einer mittleren Korngröße D50 von 20-50µm.

5. Ein halogenfreies flammhemmendes Mischsystem für glasfaserverstärktes Nylon nach Anspruch 1, **dadurch gekennzeichnet, dass** die mittlere Korngröße des genannten Zinkstannats D50 20<D50<50µm beträgt.

6. Ein halogenfreies flammhemmendes glasfaserverstärktes Nylonmaterial, **dadurch gekennzeichnet, dass** eines der genannten halogenfreien flammhemmenden Mischsysteme nach den Ansprüchen 1-5 verwendet wird.

7. Ein halogenfreies flammhemmendes glasfaserverstärktes Nylonmaterial nach Anspruch 6, **dadurch gekennzeichnet, dass** die Rohstoffzusammensetzung in Gewichtsprozent umfasst:
| | |
|---|---|
| Nylon | 30-60%; |
| Glasfasern | 20-40%; |
| Halogenfreies flammhemmendes Mischsystem | 10-30%; |
| Hilfsstoffe | 0,1-2%; |
wobei die genannten Hilfsstoffe Schmiermittel und Antioxidationsmittel umfassen.

8. Ein halogenfreies flammhemmendes glasfaserverstärktes Nylonmaterial nach Anspruch 7, **dadurch gekennzeichnet, dass** die Rohstoffzusammensetzung des genannten halogenfreien flammhemmenden Mischsystems in Gewichtsprozent umfasst:
| | |
|---|---|
| Aluminiumdiethylphosphinat | 60-75%; |
| Aluminiumorthophosphit | 15-30%; |
| Melamin-Metall-Phosphit | 5-15%; |
| Zinkstannat | 2-8%. |

9. Ein halogenfreies flammhemmendes glasfaserverstärktes Nylonmaterial nach Anspruch 6, **dadurch gekennzeichnet, dass** das genannte Nylon ausgewählt ist aus mindestens einem von Nylon6, Nylon66, Nylon MXD6 und Nylon 6T.

## Revendications

1. Système de mélange de retardateur de flamme exempt d'halogène pour un nylon renforcé par des fibres de verre, **caractérisé en ce que** : la composition de matière première comprend en pourcentage en poids :
| | |
|---|---|
| diéthylphosphinate d'aluminium | 40 à 90 % ; |
| orthophosphite d'aluminium | 8 à 30 % ; |
| phosphite de métal de mélamine | 1 à 20 % ; |
| stannate de zinc | 1 à 10 %. |

2. Système de mélange de retardateur de flamme exempt d'halogène pour un nylon renforcé par des fibres de verre selon la revendication 1, **caractérisé en ce que** : la taille moyenne de grain dudit diéthylphosphinate d'aluminium D50 est de 20 à 50 µm.

3. Système de mélange de retardateur de flamme exempt d'halogène pour un nylon renforcé par des fibres de verre selon la revendication 1, **caractérisé en ce que** : la taille moyenne de grain dudit orthophosphite d'aluminium D50 est de 20 à 50 µm.

4. Système de mélange de retardateur de flamme exempt d'halogène pour un nylon renforcé par des fibres de verre selon la revendication 1, **caractérisé en ce que** : ledit phosphite de métal de mélamine est choisi parmi le phosphite d'aluminium de mélamine et/ou le phosphite de calcium de mélamine, comportant la taille moyenne de grain D50 de 20 à 50 µm.

5. Système de mélange de retardateur de flamme exempt d'halogène pour un nylon renforcé par des fibres de verre selon la revendication 1, **caractérisé en ce que** : la taille moyenne de grain dudit stannate de zinc D50 est 20 < D50 < 50 µm.

6. Matériau de nylon renforcé par des fibres de verre à retardateur de flamme exempt d'halogène, **caractérisé en ce que** : l'un desdits systèmes de mélange de retardateur de flamme exempt d'halogène selon les revendications 1 à 5 est utilisé.

7. Matériau de nylon renforcé par des fibres de verre à retardateur de flamme exempt d'halogène selon la revendication 6, **caractérisé en ce que** : la composition de matière première comprend en pourcentage en poids :
| | |
|---|---|
| nylon | 30 à 60 % ; |
| fibres de verre | 20 à 40 % ; |
| système de mélange de retardateur de flamme exempt d'halogène auxiliaires | 10 à 30 % ; |
| lesdits auxiliaires comprenant un lubrifiant et un antioxydant. | 0,1 à 2 % ; |

8. Matériau de nylon renforcé par des fibres de verre à retardateur de flamme exempt d'halogène selon la revendication 7, **caractérisé en ce que** : la composition de matière première comprend en pourcentage en poids dudit système de mélange de retardateur de flamme exempt d'halogène :
| | |
|---|---|
| diéthylphosphinate d'aluminium | 60 à 75 % ; |
| orthophosphite d'aluminium | 15 à 30 % ; |
| phosphite de métal de mélamine | 5 à 15 % ; |
| stannate de zinc | 2 à 8 %. |

9. Matériau de nylon renforcé par des fibres de verre à retardateur de flamme exempt d'halogène selon la revendication 6, **caractérisé en ce que** : ledit nylon est choisi parmi au moins l'un parmi un nylon6, un nylon66, un nylon MXD6 et un nylon 6T.
